Europäisches Patentamt

European Patent Office

Office européen des brevets

(11) Veröffentlichungsnummer: **0 006 601**
**B1**

(12) **EUROPÄISCHE PATENTSCHRIFT**

(45) Veröffentlichungstag der Patentschrift:
08.05.85

(21) Anmeldenummer: 79102094.4

(22) Anmeldetag: 25.06.79

(51) Int. Cl.⁴: **B 29 D 23/22**, B 29 K 1/00,
A 22 C 13/00

(54) **Verfahren zur kontinuierlichen Herstellung faserverstärkter Schlauchhüllen auf Basis von Cellulosehydrat sowie Vorrichtung zur Verfahrensdurchführung.**

(30) Priorität: 03.07.78 DE 2829102

(43) Veröffentlichungstag der Anmeldung:
09.01.80 Patentblatt 80/1

(45) Bekanntmachung des Hinweises auf die Patenterteilung:
08.05.85 Patentblatt 85/19

(84) Benannte Vertragsstaaten:
BE DE FR GB

(56) Entgegenhaltungen:
DE - A - 2 100 210
DE - B - 1 107 928
DE - B - 1 504 982
FR - A - 2 013 806
GB - A - 1 336 850
US - A - 1 163 740
US - A - 1 864 006
US - A - 2 105 273
US - A - 2 144 900
US - E - 19 329

(73) Patentinhaber: HOECHST AKTIENGESELLSCHAFT,
Postfach 80 03 20, D-6230 Frankfurt am Main 80 (DE)

(72) Erfinder: Gord, Herbert, Ahornweg 5, D-6507 Ingelheim
(DE)
Erfinder: Becker, Reinhold, Dr., Am Hohen Stein 18,
D-6200 Wiesbaden (DE)

## Beschreibung

Die Erfindung bezieht sich auf ein Verfahren zur kontinuierlichen Herstellung faserverstärkter Schlauchhüllen auf Basis von Cellulosehydrat, insb. von Wursthüllen, von der im Oberbegriff des Anspruchs 1 genannten Art und auf eine Vorrichtung zur Durchführung dieses Verfahrens.

Bei den bekannten Verfahren zur Herstellung faserverstärkter Cellulosehydratschläuche wird der mittels einer Ringschlitzdüse auf seiner Außenseite mit Viskoselösung beaufschlagte und dadurch mit dieser imprägnierte und beschichtete Faserschlauch durch eine hinreichend lang dimensionierte Wanne hindurchgeführt, die mit Fällflüssigkeit gefüllt ist.

Viskoselösung ist bekanntlich eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium. Nach dem Aufbringen der Viskoselösung auf den Faserschlauch wird die Viskose duch Fällflüssigkeit versponnen, d. h. koaguliert bzw. gefällt. Die Fällflüssigkeit, in der Wanne auch als Spinnbad bezeichnet, enthält gewöhnlich neben Sulfaten vor allem Schwefelsäure, welche die Viskose (Cellulosexanthogenat) zersetzt unter Bildung von Gasen (Schwefelkohlenstoff, Schwefelwasserstoff) und Cellulosehydrat, d. h. regenerierter Cellulose. Diesen Reaktionsschritt, bei dem die Fällflüssigkeit auf die Viskose einwirkt, nennt man auch Koagulationsvorgang.

Im Boden der Wanne des Spinnbades sind drehbar gelagerte Umlenkwalzen vorgesehen, wobei mit der ersten Umlenkwalze der in die mit Fällflüssigkeit eintauchende Schlauch zunächst in die Horizontale und dann durch die zweite Umlenkwalze in die Vertikale umgelenkt und wieder aus der Wanne herausgeführt wird. Die Beaufschlagung wird dabei in der Weise durchgeführt, daß anfänglich eine bestimmte Menge Fällflüssigkeit in den Hohlraum des zu beaufschlagenden Schlauchs eingeschlossen wird.

Während der Zeitdauer, in der der Schlauch die Fällflüssigkeit durchläuft, steht die Schlauchoberfläche mit einer großen Menge Fällflüssigkeit unmittelbar in Kontakt, wobei im wesentlichen keine Relativbewegung zwischen dieser und der Wand des längsaxial fortbewegten viskosierten Faserschlauchs vorhanden ist.

Bei den bekannten Verfahren wird Fällflüssigkeit in den Schlauchhohlraum unten an der Abzugswalze stetig zugeführt und an der Spinndüsenseite unterhalb der Spinndüse abgesaugt, so daß im aufsteigenden Schlauchteil stets stark verbrauchtes Fällmittel steht. Das auf die Schlauchaußenseite wirkende Fällmittel hat im wesentlichen gleichmäßige Konzentration. Die Konzentration der auf die Außenseite des Schlauchs wirkenden Fällflüssigkeit ist jedoch niedriger als die im Schlauchhohlraum, um kreisförmigen Querschnitt des Schlauchs zu gewährleisten.

Die bei dem Koagulations- und Regenerationsvorgang der Viskose durch Einwirkung der Fällflüssigkeit entstehenden Gase steigen sowohl in der Fällflüssigkeit im Schlauchhohlraum als auch in der Fällflüssigkeit, die sich in der Wanne befindet, als Gasblasen auf und werden über der Fällflüssigkeitsoberfläche mit Luft verdünnt abgesaugt.

Die Nachteile der bekannten Verfahren bestehen deshalb in folgendem:

1. Die Konzentration der gelösten Teile der auf die Innenseite des Schlauchs wirkenden Fällflüssigkeit muß größer sein als die auf die Schlauchaußenseite wirkende.

2. Um einen optimalen Koagulationsablauf bei Einwirkung der Fällflüssigkeit auf die Viskoselösung zu gewährleisten, muß die Fällflüssigkeit das Gelöste in relativ geringen Mengen enthalten, um unerwünschte Folgeerscheinungen, die sich bei zu schneller Koagulation leicht einstellen — beispielsweise starke Gasentwicklung —, zu vermeiden.

3. Zur Entfernung der beim Koagulationsvorgang entstehenden Gase im Entquellungswasser muß dieser unerwünscht häufig aufgeschlitzt werden, um die genannten Medien aus dem Schlauchhohlraum abführen zu können; ein derartiges Aufschneiden des Schlauchs ist deshalb unerwünscht, weil es zur Unterbrechung des Verfahrensablaufs und zu unerwünschten Einschnitten im Schlauch, die wieder verklebt werden müssen, führt.

4. Die Relativbewegung zwischen Schlauchoberfläche und der jeweils an diese angrenzenden Fällflüssigkeitsmenge ist praktisch nicht gegeben.

5. Aufgrund des relativ großen Volumens der Fällflüssigkeit in der Wanne ist die Änderung der Schwefelsäurekonzentration der Fällflüssigkeit nur nach relativ langer Zeit erreichbar.

6. Die Konzentration der Fällflüssigkeit in der Wanne muß infolge nicht vermeidbarer Produktionsschwankungen, wie Abrisse des Schlauchs, relativ oft nachgeregelt werden, da dabei die im Schlauchhohlraum befindliche höher konzentrierte Fällflüssigkeit in die im Bad befindliche gelangt und dort zu einer höheren Konzentration derselben an Gelöstem führt.

Die der Erfindung zugrundeliegende Aufgabe besteht darin, ein Verfahren von der im Oberbegriff des Anspruchs 1 genannten Art anzugeben, das die bekannten Nachteile nicht aufweist, das eine vereinfachte Produktion bei höheren Geschwindigkeiten zur Beschichtung und Imprägnierung des Faserschlauchs mit Viskoselösung zuläßt, eine einfache Beseitigung von beim Verfahren entstehenden chemischen Stoffen, wie Schwefelkohlenstoff und Schwefelwasserstoff, ermöglicht, während des Koagulationsvorgangs eine einfache Schlauchführung zuläßt und die Notwendigkeit häufigen Einschneidens des Schlauchs zur Entfernung von Gasen und Flüssigkeiten aus dem Schlauchhohlraum vermeidet.

Die der Erfindung zugrundeliegende Aufgabe wird gelöst durch das im Anspruch 1 angegebene Verfahren und die Vorrichtung mit den im Anspruch 4 genannten Merkmalen.

Aus der FR-A-2 013 806 ist zwar ein Verfahren bekannt, bei dem die Außenseite eines in Richtung von oben nach unten längsaxial geradlinig fortbewegten Schlauches ringförmig mit einer Flüssigkeit beaufschlagt wird. Unmittelbar anschließend wird der Schlauch mit Flüssigkeit auf seiner Oberfläche allerdings nicht frei durch eine Luftstrecke, sondern durch ein unter Spannung eng anliegendes Stützmittel in Form eines zylindrischen Netzes geführt, wodurch auf den Filmschlauch ein Reibungswiderstand ausgeübt wird. Durch die aufeinanderfolgenden Maschen des Netzes, auf denen die Flüssigkeit strömt, wird ein turbulenter Strom erzeugt und die Flüssigkeit ständig durch Richtungsänderung der Strömung an jeder Masche des Netzes bewegt. Im Gegensatz dazu ist bei dem Verfahren der Erfindung ein Netz zum Stützen des Schlauches und zum Verteilen der Flüssigkeit nicht vorgesehen, sondern der mit Flüssigkeit beaufschlagte Schlauch wird durch eine Luftstrecke frei geführt. Außerdem dient die bei dem Verfahren nach der FR-A-2 013 806 verwendete Flüssigkeit zum Abschrecken einer extrudierten Schmelze aus einem thermoplastischen Polymeren oder zur rein physikalischen Koagulation einer Polymerlösung durch Lösungsmittelextraktion, während die Erfindung von einem ganz anderen Verfahren ausgeht, bei dem durch die Fällflüssigkeit eine chemische Reaktion unter Zersetzung eines Produktes und Freiwerden von Reaktionsgasen bewirkt werden muß. Bei Verfahren dieser Art wurde die Fällflüssigkeit bisher stets in einem Bad, dem sogenannten Spinnbad, zur Einwirkung gebracht.

Aus der US-A-1 864 006 und US-E-19 329 ist es darüberhinaus bekannt, zur Herstellung von Schläuchen aus Cellulosehydrat die Außenseite des in Richtung von oben nach unten längsaxial geradlinig fortbewegten Schlauches aus Viskose fortlaufend entlang einer Kreislinie mit Fällflüssigkeit zu beaufschlagen und unmittelbar anschließend den Schlauch durch eine Luftstrecke frei zu führen. Hierbei handelt es sich allerdings um nichtfaserverstärkte, schlauchförmig extrudierte Viskose, die bereits in einer Vorstufe auf ihrer Innenseite durch ein Fällbad teilkoaguliert ist.

Bei dem Verfahren der US-A-1 163 740 wird dagegen die schlauchförmig extrudierte Viskose etwa gleichzeitig auf ihrer Innen- und Außenseite fortlaufend entlang einer Kreislinie mit einer Fällflüssigkeit beaufschlagt. Abgesehen davon, daß auch in diesem Fall die Viskose keine Faserverstärkung aufweist, wird der Viskoseschlauch bei diesem Verfahren unmittelbar nach dem Beaufschlagen mit Fällflüssigkeit auf ein wannenartiges Förderband abgelegt und nicht frei durch eine Luftstrecke geführt.

Das Verfahren der US-A-2 105 273 zeigt die Merkmale des Verfahrens nach dem Oberbegriff des Anspruchs 1. Als eine mögliche Alternative wird beiläufig angegeben, die Fällflüssigkeit durch Sprühen auf den viskosierten Faserschlauch aufzubringen. Durch Sprühen wird allerdings die Fällflüssigkeit nicht zwangsläufig entlang einer Kreislinie und schon gar nicht als Film auf den viskosierten Faserschlauch aufgebracht.

Der mit Viskoselösung imprägnierte und beschichtete Faserschlauch wird als »viskosierter Faserschlauch« bezeichnet.

Der Ausdruck »Faserschlauch« bezeichnet einen Schlauch aus Fasermaterial in Wirrlageanordnung, insbesondere einen Schlauch aus Papierfasern. Verfahrensgemäß bevorzugte Faserschläuche bestehen aus langfaserigem Papier.

Die Herstellung von Faserschläuchen aus Faserbahnen mit Hilfe bekannter Formvorrichtungen, sogenannter Faltschultern, ist bekannt und nicht Gegenstand der vorliegenden Erfindung, desgleichen betrifft diese nicht die Herstellung von viskosierten Faserschläuchen.

Die Herstellung geeigneter Viskoselösungen ist beispielsweise in der US-A-3 280 234 beschrieben.

Die an sich bekannte Imprägnierung und Beschichtung von Faserschläuchen mit Viskoselösung erfolgt mit Hilfe von Ringschlitzdüsenkörper, wie sie beispielsweise in der GB-A-1 336 850 beschrieben sind.

Die wesentlichen Maßnahmen des Verfahrens bestehen darin, daß man einen mit stetiger Geschwindigkeit in Richtung von oben nach unten längsaxial geradlinig fortbewegten viskosierten Faserschlauch wenigstens auf seiner äußeren Oberfläche entlang wenigstens einer Kreislinie fortlaufend mit Fällflüssigkeit beaufschlagt und unmittelbar nach der Fällmittelbeaufschlagung den mit einem Film aus Fällflüssigkeit auf seiner Oberfläche versehenen viskosierten Faserschlauch durch wenigstens eine Luftstrecke frei führt. Im Bereich der Luftstrecke erfolgt die Einwirkung der den flüssigen Film bildenden Fällflüssigkeit auf den viskosierten Faserschlauch. Die Gesamteinwirkungsdauer eines Fällflüssigkeitsfilmabschnitts bestimmter Abmessung auf einen entsprechenden Abschnitt des viskosierten Faserschlauchs beim Durchlaufen desselben durch die gesamte jeweilige Luftstrecke hängt jeweils von deren Gesamtlänge und der jeweiligen Fortbewegungsgeschwindigkeit des viskosierten Faserschlauchs ab. Durch die Einwirkung der Fällflüssigkeit wird die den Faserschlauch imprägnierende und beschichtende Viskoselösung koaguliert und dabei chemisch in Cellulosehydrat umgewandelt. Dabei entstehende Gase und Flüssigkeit werden mit von der Schlauchoberfläche ablaufender überschüssiger Fällflüssigkeit aufgenommen und abgeführt. Von der Außenseite des mit Fällflüssigkeit beaufschlagten viskosierten Faserschlauchs ablaufende überschüssige Flüssigkeit, die teilweise beim Fällvorgang entstehende Flüssigkeit und Gase enthält, wird in einer Wanne aufgefangen und kann gegebenenfalls nach Aufbereitung dem Verfahrenskreislauf wieder zugeführt werden.

Von der Innenseite des mit Fällflüssigkeit beaufschlagten viskosierten Faserschlauchs abfließende überschüssige Flüssigkeit wird fortlaufend aus dem Schlauchhohlraum abgesaugt und kann nach entsprechender Aufbereitung dem Verfahrenskreislauf wieder zugeführt werden.

Von der Oberfläche des viskosierten Faserschlauchs ablaufende überschüssige Fällflüssigkeit enthält teilweise beim Fällvorgang entstehendes Quellwasser sowie dabei entstehende Gase.

Es ist auch möglich, den viskosierten Faserschlauch bei der Verfahrensdurchführung über oder durch einen geraden, gegebenenfalls hohlzylindrischen Dorn als Kalibriereinrichtung zu ziehen.

Aufgrund der hohen Volumenströme von Fällflüssigkeit an der Schlauchaußen- und gegebenenfalls zugleich an der Schlauchinnenseite werden die bei der Koagulation und Regeneration der Viskose infolge Einwirkung des Fällmittels entstehenden Gase im Fällflüssigkeitsfilm auf der Schlauchoberfläche mitgeführt, so daß diese in einem Entgasungsbehälter konzentriert abgesaugt werden können, wodurch eine Abluftreinigungsanlage rationeller arbeitet. Gegebenenfalls kann zur schnelleren bzw. vollständigeren Koagulation und Regeneration der Viskose zu Cellulosehydrat der fällflüssigkeitsbeaufschlagte viskosierte Faserschlauch nach Durchlaufen der Luftstrecke erneut entlang einer weiteren Kreislinie — bevorzugt auf seiner Außenseite — mit Fällflüssigkeit beaufschlagt werden. Diese zweite Fällmitteleinwirkung erfolgt dabei bevorzugt im aufsteigend verlaufenden Schlauchteil, nach Umlenkung des Schlauchs durch eine Umlenkwalze am Boden einer Auffangwanne für von der Außenseite des Schlauchs abtropfende Fällflüssigkeit.

An die zweite Beaufschlagung der Außenseite des Schlauchs schließt sich eine weitere Luftstrecke an, die sich von der Kreislinie nach unten, d. h. entgegengesetzt zur Schlauchfortbewegungsrichtung, erstreckt.

Vorteilhaft wird das Verfahren derart durchgeführt, daß der viskosierte Faserschlauch nach Fällflüssigkeitsbeaufschlagung und freien Durchlaufen der Luftstrecke mit einer Umlenkwalze derart umgelenkt wird, daß er sich anschließend an diese vertikal in Richtung von unten nach oben bewegt. Die im Schlauchhohlraum im Bereich der Schlauchkrümmung ansammelnde Flüssigkeit wird fortlaufend zugleich im absteigenden und aufsteigenden Schlauchteil durch jeweils kurz unterhalb des einzuhaltenden Flüssigkeitsspiegels mündende Rohrleitungen abgesaugt.

Die erfindungsgemäße Vorrichtung umfaßt einen an sich bekannten Kreisringkörper mit an seiner Innenseite mündendem Ringschlitzspalt zum fortlaufenden Imprägnieren und Beschichten eines mit stetiger Geschwindigkeit durch seinen Hohlraum hindurchgeführten Faserschlauchs mit Viskoselösung sowie wenigstens ein im Querschnitt kreisförmiges Element mit an seinem Umfang mündendem Kreisringschlitzspalt zur Beaufschlagung wenigstens einer Oberfläche des viskosierten Faserschlauchs mit Fällflüssigkeit.

In bevorzugter Ausgestaltung umfaßt die Vorrichtung zwei jeweils im Querschnitt kreisförmige Elemente mit Ringschlitzspalt zur fortlaufenden Beaufschlagung jeweils der Außen- und Innenseite des viskosierten Faserschlauchs entlang jeweils einer Kreislinie mit Fällflüssigkeit. Das zur Beaufschlagung der Außenseite des viskosierten Faserschlauchs dienende Element hat die Gestalt eines hohlen Zylinders, nachfolgend Mantel genannt, mit einem an der Mantelinnenseite mündenden Ringschlitzspalt und das zur Beaufschlagung der Innenseite des viskosierten Faserschlauchs mit Fällflüssigkeit dienende Element besteht aus einem Zylinder mit an seiner Umfangswand mündendem Kreisringschlitzspalt.

Anstatt der genannten Elemente zur Beaufschlagung des viskosierten Faserschlauchs mit Fällflüssigkeit kann man auch Sprühdüsen verwenden, die definitionsgemäß als im Querschnitt kreisförmige Elemente gelten sollen. Die Sprühdüsen sind ebenfalls befähigt, viskosierte Faserschläuche entlang von Kreislinien mit Fällflüssigkeit zu beaufschlagen.

Eine zweckmäßige Ausführungsform der Vorrichtung umfaßt einen Kreisringdüsenkörper mit Kreisringschlitzspalt zum Imprägnieren und Beschichten eines Faserschlauchs mit Viskoselösung, ein kreisringförmiges Element in Gestalt eines hohlzylindrischen Mantels mit an der Mantelinnenseite mündendem Kreisringschlitzspalt in seiner Wand zur Beaufschlagung der Außenseite des viskosierten Faserschlauchs mit Fällflüssigkeit entlang einer Kreislinie und ein Element in Form eines Zylinders mit an dessen Umfang mündendem Kreisringschlitzspalt zur Beaufschlagung der Innenseite des viskosierten Faserschlauchs entlang einer Kreislinie, die in der Weise räumlich zueinander angeordnet sind, daß ihre geraden Symmetrielängsachsen fluchten, wobei die Fluchtlinie in vertikaler Ebene verläuft.

Die der Beaufschlagung des viskosierten Faserschlauchs mit Fällflüssigkeit dienenden Elemente sind dabei — in Richtung der Schlauchfortbewegung von oben nach unten betrachtet — unterhalb des Düsenkörpers zur Imprägnierung und Beschichtung des Faserschlauchs mit Viskoselösung angeordnet.

In einer vorteilhaften Ausführungsform der Vorrichtung werden die genannten Elemente zum Auftragen von Beschichtungsflüssigkeit ohne Einstellschrauben zur Einstellung der Dicke der Kreisringschlitzspalte benutzt, da hierdurch eine unerwünschte Verstellung der Düsenschlitzspaltbreite unterbunden wird.

Die zur Beaufschlagung des viskosierten Faserschlauchs mit Fällflüssigkeit verwendeten Elemente mit Kreisringschlitzspalt sind derart ausgebildet, daß durch Stauräume in den Düsenschlitzspalten gleiche Druckverhältnisse und somit gleiche Verteilung und gleichmäßiger Austritt der Fällflüssigkeit jeweils aus ihren Mündungsöffnungen gewährleistet sind.

Die Bezeichnung »kreisförmige Linie« für jeweils eine Zone der Oberfläche des mit stetiger Geschwindigkeit längsxial geradlinig vertikal fortbewegten viskosierten Faserschlauchs, innerhalb welcher dieser fortlaufend mit Fällflüssigkeit beaufschlagt wird, bezeichnet jeweils einen kreisringförmigen sehr schmalen Bereich der Schlauchoberfläche, dessen Breite im Verhältnis zum Schlauchumfang so gering ist, daß er praktisch als linienförmig bezeichnet werden kann.

Die definierte »kreisförmige Linie« kann als Auftrefflinie von Fällflüssigkeit auf die Oberfläche des viskosierten Faserschlauchs aufgefaßt werden.

Die Bezeichnung »Luftstrecke« wird für jeweils unmittelbar an kreisförmige Auftrefflinien von Fällflüssigkeit auf die Oberfläche des viskosierten Faserschlauchs anschließende gerade vertikale Wegstrecken jeweils bestimmter Länge verwendet. Diese Wegstrecken werden von unmittelbar aufeinanderfolgenden, mit dünnem Fällflüssigkeitsfilm auf der Oberfläche versehenen Abschnitten bestimmter Abmessung des viskosierten Faserschlauchs mit gleichbleibender Geschwindigkeit geradlinig vertikal frei durchlaufen.

Innerhalb der Luftstrecke grenzt die Außenseite des Films aus Fällflüssigkeit auf der Oberfläche des viskosierten Faserschlauchs ausschließlich an gasförmiges Medium an. Flüssigkeitsgesättigte Dämpfe und/oder Gasmischungen im Schlauchhohlraum werden dabei ebenfalls als gasförmiges Medium bezeichnet.

Die Luftstrecke stellt nach ihrer Funktion eine Zone dar, innerhalb derer die den Faserschlauch imprägnierende und beschichtende Viskose durch die Einwirkung der Fällflüssigkeit in Gestalt des flüssigen Films auf seiner Oberfläche jeweils hinreichend weitgehend koaguliert und durch chemische Umsetzung mit dem Fällmittel in Cellulosehydrat umgewandelt wird. Während der Gesamteinwirkungsdauer von Fällflüssigkeitsfilm im Bereich der Luftstrecke auf das Substrat erfolgt die chemische Umwandlung der den Faserschlauch imprägnierenden und beschichtenden Viskose in Cellulosehydrat. Die im Einzelfall zu wählende Länge der jeweiligen Luftstrecke ist abhängig von der Schlauchfortbewegungsgeschwindigkeit sowie der Menge der pro Zeiteinheit aus der Mündungsöffnung des Schlitzspalts austretenden Fällflüssigkeitsmenge sowie deren qualitativer und quantitativer chemischer Zusammensetzung, ihrer Temperatur bzw. der Temperatur der Umgebungsluft.

Die Gesamtlänge der Luftstrecke ist dabei jeweils derart zu bemessen, daß innerhalb derselben hinreichend vollständige Koagulierung der Viskose und Umwandlung in Cellulosehydrat erfolgt. Gegebenenfalls kann — wenn aus apparativbaulichen Gründen die Luftstrecke sehr kurz bemessen werden muß — erneute Beaufschlagung des Schlauchs mit Fällflüssigkeit entlang einer weiteren Kreislinie erfolgen, an die sich dann abermals eine Luftstrecke anschließt. Die entsprechenden Kenndaten zur Festlegung für den Einzelfall geeigneter Luftstrecken lassen sich in einfacher Weise und durch wenige Vorversuche ermitteln.

In einer zweckmäßigen Ausführungsform des Verfahrens erfolgt die fortlaufende Beaufschlagung des viskosierten Faserschlauchs mit Fällflüssigkeit entlang von konzentrischen kreisförmigen Linien auf der Außenseite und Innenseite, wobei die Kreislinien sich in einer gemeinsamen horizonzalen Ebene erstrecken, die mit der geraden Schlauchlängsachse einen rechten Winkel bilden.

Nach einer Variante des Verfahrens können sich die beiden Kreislinien auch jeweils in horizontalen Ebenen erstrecken, die im Abstand parallel zueinander verlaufen und jeweils einen rechten Winkel mit der geraden Schlauchlängsachse bilden.

Das kreisringförmige Element an der Außenseite besteht vorteilhaft aus einem hohlzylinderförmigen Mantel, beispielsweise aus Metall, wobei dessen kreisringförmiger Schlitzspalt (Ringschlitzspalt) sich in der Mantelwand in einer Ebene erstreckt, die einen rechten Winkel zur Mantellängsachse bildet. Der Schlitzspalt weist eine Mündungsöffnung an der Mantelinnenseite auf.

In der Mantelwand ist eine von seiner Außenseite zum Schlitzspalt führende Bohrung vorgesehen, durch die Fällflüssigkeit in den Hohlraum des Schlitzspaltes einführ- und aus seiner Mündungsöffnung auspreßbar ist.

Gegebenenfalls ist die Vorrichtung in der Weise ausgebildet, daß im Hohlraum des Mantels — zentrisch angeordnet — ein entsprechend bemessener zylinderförmiger Gegenkörper, der auch zugleich als Kalibrierelement für den durch den Hohlraum geführten viskosierten Faserschlauch wirkt, vorgesehen ist. Der hohlzylinderförmige Mantel sowie gegebenenfalls der in seinem Hohlraum vorgesehene Zylinder sind durch geeignete Haltevorrichtungen jeweils lagefixiert befestigt.

Während der Durchführung des Verfahrens ist der Faserschlauch bzw. der viskosierte Faserschlauch durch in seinem Hohlraum befindliche Stützluft aufgebläht.

Der gegebenenfalls zum Einsatz gelangende, im Hohlraum des viskosierten Faserschlauchs angeordnete und befestigte Zylinder als Gegenelement zum hohlzylinderförmigen Mantel bzw. als Kalibrierelement weist einen Durchmesser auf, der nur wenig kleiner ist als der Innendurchmesser des viskosierten Faserschlauchs.

Der kreisringförmige Hohlraum zwischen Mantelinnenseite und Außenseite des Zylinders wird auch als »Schlauchdurchgang« bezeichnet.

Der bei zweckmäßiger Verfahrensdurchführung, nach der sowohl die Außen- als auch zugleich die Innenseite des viskosierten Faserschlauchs mit Fällflüssigkeit beaufschlagt wird, benützt man zur Beaufschlagung der Innenseite einen im Hohlraum des viskosierten Faserschlauchs lagefixiert angeordneten und befestigten Zylinder mit kreisringförmigem Schlitzspalt, der sich in einer Ebene, die einen rechten Winkel zur Zylinderlängsachse bildet, erstreckt und der in der Zylinderumfangsfläche mündet.

Der Zylinder weist eine Bohrung auf, die von seiner Stirnseite zum Schlitzspalthohlraum führt und durch die Fällflüssigkeit in diesen einführ- und aus seiner Mündungsöffnung auspreßbar ist.

Die äußeren Bohrungsmündungen sind mit jeweils einem Vorratsbehälter für Fällflüssigkeit durch Rohr- oder Schlauchleitungen verbindbar und verbunden.

Der Schlauchdurchgang ist derart bemessen, daß er wenigstens der Dicke des viskosierten Faserschlauchs zusätzlich jeweils der Dicke der auf seinen Oberflächen auszubildenden Filme aus Fällflüssigkeit entspricht.

Der viskosierte Faserschlauch wird zentrisch durch den Schlauchdurchgang hindurchgeführt.

Bei der bevorzugten Verfahrensweise ist es vorteilhaft, wenn die jeweils auf die Außen- bzw. Innenseite des viskosierten Faserschlauchs zur Einwirkung gelangenden Fällflüssigkeiten bezüglich ihres qualitativen und quantitativen chemischen Aufbaus übereinstimmen.

Geeignete Fällflüssigkeiten zur Koagulierung von Viskose aus wäßrigen alkalischen Viskoselösungen und chemischen Umwandlung in Cellulosehydrat sind beschrieben und bestehen beispielsweise aus wäßrigen Lösungen, die Ammoniumsulfat, Natriumsulfat und Schwefelsäure gelöst enthalten.

Der für den Einzelfall jeweils geeignete quantitative chemische Aufbau der Fällflüssigkeit kann in einfacher Weise durch wenige Vorversuche ermittelt werden.

Nachfolgend wird beispielhaft die Durchführung des erfindungsgemäßen Verfahrens in bevorzugter Verfahrensvariante beschrieben.

In bekannter Weise wird aus einer hinreichend lang bemessenen, ausreichend breiten Faserbahn, beispielsweise aus Papier, durch längsweises überlappendes Falten fortlaufend ein Faserschlauch gebildet. Die Überlappungskanten werden in an sich bekannter Weise mit Hilfe bekannter Vorrichtungen mit Viskoselösung verklebt, dies kann in bekannter Weise gleichzeitig mit dem fortlaufenden Imprägnieren und Beschichten des Faserschlauchs erfolgen.

Vorrichtungen zur zugleichen Imprägnierung und Beschichtung von Faserschläuchen mit Viskoselösung sind beschrieben.

Bei der Beschichtung und Imprägnierung des Faserschlauchs mit Viskoselösung wird dieser fortlaufend von einer Vorratsrolle abgezogen und mit stetiger Geschwindigkeit längsaxial in Richtung von oben nach unten verlaufend geradlinig vertikal durch den kreisringförmigen Schlauchdurchlaß der Viskosierungs-Kreisringschlitzdüse hindurchgeführt und dabei fortlaufend mit Viskoselösung imprägniert und beschichtet.

Die Beaufschlagung des viskosierten Faserschlauchs mit Fällflüssigkeit erfolgt örtlich — in Richtung der Schlauchfortbewegung von oben nach unten betrachtet — nach der Viskosierung des Faserschlauchs.

Der viskosierte Faserschlauch wird dabei — ohne Änderung seiner Anordnung im Raum — zentrisch durch den Schlauchdurchgang hindurchgeführt, der durch die Innenseite des hohlzylinderförmigen Mantels mit Ringschlitzspalt und die Außenseite des Zylinders mit Kreisringschlitzspalt gebildet wird.

Aus Vorratsgefäßen wird jeweils den Schlitzspalten der genannten Elemente zur Fällflüssigkeitsbeaufschlagung des viskosierten Faserschlauchs fortlaufend Fällflüssigkeit in hinreichender Menge zugeführt, wobei diese jeweils stetig aus den Mündungsöffnungen der Schlitzspalte austritt. Die jeweils aus den Mündungsöffnungen der Schlitzspalte austretende Fällflüssigkeit trifft dabei entlang einer Kreislinie auf die Oberfläche des mit gleichbleibender Geschwindigkeit an den Schlitzspaltmündungsöffnungen vorbeigeführten viskosierten Faserschlauchs auf und überzieht diese fortlaufend mit einem dünnen Fällflüssigkeitsfilm.

Der fällflüssigkeitsbeaufschlagte viskosierte Faserschlauch, der auf seiner Außen-, bevorzugt auch auf seiner Innenseite einen im Vergleich zu seiner Wandstärke dünnen Fällflüssigkeitsfilm aufweist, wird dann unmittelbar nach der Beaufschlagung — ohne Änderung seiner Anordnung im Raum — mit vorgegebener Geschwindigkeit durch entsprechend lang bemessene Luftstrekken hindurchgeführt.

Sofern eine Verkürzung der Länge der Luftstrecke ohne Minderung des Koagulationseffekts des Films aus Fällflüssigkeit im Bereich derselben angestrebt wird, führt man das Verfahren vorteilhaft in der Weise durch, daß die Luftstrecke in einen Heiztunnel verlegt wird, den der viskosierte, mit Film aus Fällflüssigkeit auf seiner Oberfläche versehene Schlauch durchläuft.

Der Heiztunnel kann beispielsweise mit Warmluft hinreichender Temperatur beaufschlagt sein, oder die im Heiztunnel gewünschte Wärme wird durch im Heiztunnel vorgesehene Infrarotstrahlung emitierende Heizquellen hervorgerufen.

Sobald jeweils ein auf seiner Oberfläche mit Fällflüssigkeitsfilm versehener, viskosierter Faserschlauchabschnitt bestimmter Länge die gesamte Länge der Luftstrecke mit bestimmter Geschwindigkeit durchlaufen hat, ist dabei durch die Wirkung des Fällmittels die Viskose koaguliert und in Cellulosehydrat umgewandelt.

Der so gebildete faserverstärkte Schlauch auf Basis von Cellulosehydrat wird dann vorteilhaft unter teilweiser Flachlegung um wenigstens eine, bevorzugt mehrere nacheinander angeordnete Umlenkwalzen, deren Achsen jeweils parallel zueinander verlaufen, geführt und in an sich bekannter Weise nachbehandelt. Zur Nachbehandlung wird der faserverstärkte Schlauch auf Basis von Cellulosehydrat gewaschen, beispielsweise indem man ihn durch eine mit Wasser gefüllte Wanne hindurchführt, danach mit chemischem Weichmachungsmittel behandelt, beispielsweise mit wäßriger Glycerinlösung, und danach getrocknet, beispielsweise indem man ihn durch einen entsprechend temperierten Trockenkanal führt.

Gegebenenfalls wird der faserverstärkte Schlauch auf Basis von Cellulosehydrat zur Einstellung eines bestimmten Endwassergehalts, beispielsweise von ca. 10 Gew.-%, bezogen auf das Gesamtgewicht des Schlauchs, nach dem Trocknen mit Wasser befeuchtet, beispielsweise durch Besprühen.

Waschen des Schlauchs mit Wasser, Einwirkung von Weichmachungsmittel enthaltender Lösung auf den Schlauch, Schlauchtrocknung sowie die Nachbefeuchtung sind zum Stand der Technik gehörende Maßnahmen.

Bei der geschilderten bevorzugten Verfahrensdurchführung ist es zweckmäßig, am Ende der Luftstrecke unterhalb der ersten drehbar gelagerten Umlenkwalze eine Wanne zum Auffangen überschüssiger, von der Außenseite des Schlauchs ablaufender Fällflüssigkeit vorzusehen.

Die in der Auffangwanne gesammelte, vom Schlauch abgelaufene Flüssigkeit kann gegebenenfalls aufbereitet und wieder in den Verfahrenskreislauf eingeführt werden.

Von der mit Fällflüssigkeit beaufschlagten Innenseite des viskosierten Faserschlauchs ablaufende überschüssige Flüssigkeit sammelt sich vor der Umlenkwalze im Hohlraum des faserverstärkten Schlauchs aus Cellulosehydrat und wird aus diesem in bekannter Weise mittels bekannter Vorrichtungen stetig abgepumpt. Die abgepumpte Flüssigkeit kann gegebenenfalls nach Aufbereitung wieder in den Kreislauf zurückgeführt werden.

Die Durchführung der geschilderten bevorzugten Verfahrensvariante kann auch in der Weise abgewandelt werden, daß man den Schlauch nach Durchlaufen der Luftstrecke erneut auf seiner Außenseite entlang einer Kreislinie mit Fällflüssigkeit beaufschlagt und ihn danach durch eine weitere Luftstrecke hindurchführt.

Die erneute Beaufschlagung der Schlauchaußenseite mit Fällflüssigkeit erfolgt dabei, nachdem der Schlauch die erste Umlenkwalze passiert hat und sich danach längsaxial geradlinig vertikal in Richtung von unten nach oben bewegt. Die erneute Beaufschlagung der Außenseite des Schlauchs im aufsteigenden Teil desselben mit Fällflüssigkeit entlang einer Kreislinie erfolgt mit einem Element, das entsprechend dem aufgebaut ist, das zur erstmaligen Beaufschlagung der Außenseite des viskosierten Faserschlauchs verwendet und dabei in gleicher Weise wie dieses zum Einsatz gelangt. Die zweite Luftstrecke schließt sich an die zweite Beaufschlagung der Schlauchaußenseite entlang einer Kreislinie an und erstreckt sich von dieser aus — in Fortbewegungsrichtung des aufsteigenden Schlauchteils von unten nach oben betrachtet — nach unten. Die Nachbehandlung des Schlauchs erfolgt analog zu der voranstehend erläuterten.

In der Beschreibung wird der Ausdruck »Achse« in der Bedeutung »geometrische Achse« verwendet.

Die Art der Befestigung der Elemente der Vorrichtung an bestimmten Halteeinrichtungen ist nicht in der Beschreibung näher erläutert, weil diese nicht wesentlich für die Erfindung ist und derartige Befestigungselemente zum Stand der Technik gehören.

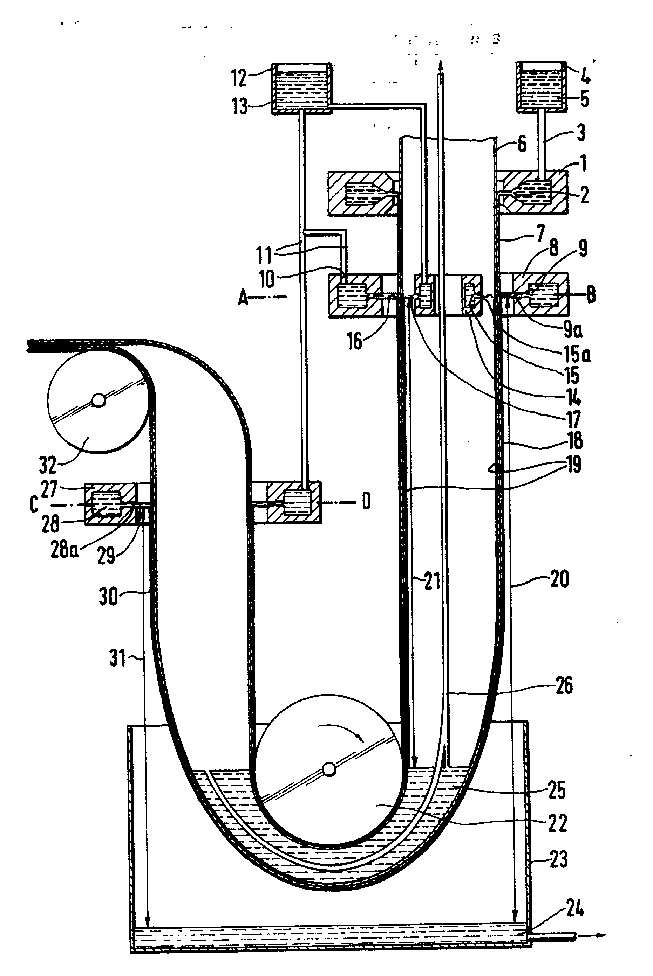

Die Zeichnung soll eine bevorzugte Variante der Erfindung beispielhaft erläutern.

In der Zeichnung ist schematisch im Querschnitt eine bevorzugte Vorrichtung zur Durchführung einer besonderen Verfahrensvariante des erfindungsgemäßen Verfahrens dargestellt.

In der Zeichnung bedeutet dabei 1 einen Kreisringkörper mit Ringschlitzspalt 2 zur Beschichtung und Imprägnierung des im Querschnitt kreisförmigen Faserschlauchs 6 mit Viskoselösung 5. Es ist 3 eine Rohrleitung, die ein Vorratsgefäß 4 für die Viskoselösung 5 mit dem Kreisringkörper 1 über eine Bohrung in diesem verbindet. 7 ist der viskosierte Faserschlauch in luftaufgeblähtem, im Querschnitt kreisförmigem Zustand, 8 ist ein hohlzylinderförmiger Mantel, der in seiner Wand einen Kreisringschlitzspalt 9 mit Mündungsöffnung 9a an der Mantelinnenseite aufweist. 10 ist eine Bohrung in der Wand des Mantels 8, an deren Außenseite eine Rohrleitung 11 befestigt ist, durch die aus einem Vorratsgefäß 12 Fällflüssigkeit 13 in den Kreisringschlitzspalt 9 im Mantel 8 gelangt. 14 ist ein im Hohlraum des luftaufgeblähten viskosierten Faserschlauchs 7 angeordneter Zylinder mit Kreisringschlitzspalt 15 mit Mündungsöffnung 15a an der Zylinderumfangsfläche, 16 ist aus der Mündungsöffnung 9a des Kreisringschlitzspalts 9 im Mantel 8 austretende Fällflüssigkeit. 17 ist aus der Mündungsöffnung 15a austretende Fällflüssigkeit 13, die diesem aus dem Vorratsgefäß 12 über die Rohrleitung 11 zugeführt wird. 18 ist der Fällflüssigkeitsfilm auf der Außenseite des viskosierten Faserschlauchs und 19 der auf seiner Innenseite. 20 ist eine Luftstrecke an der Außenseite des fällflüssigkeitsbeaufschlagten viskosierten Faserschlauchs und 21 eine Luftstrecke an seiner Innenseite. 22 zeigt eine Umlenkwalze, die in der Wanne 23 drehbar gelagert angeordnet ist und um die der in Pfeilrichtung mit stetiger Geschwindigkeit fortbewegte Schlauch unter teilweiser Flachlegung geführt wird. 24 ist von der Außenseite des mit Fällflüssigkeit beaufschlagten viskosierten Faserschlauchs abgelaufene überschüssige Flüssigkeit, 25 ist von der Innenseite des mit Fällflüssigkeit beaufschlagten viskosierten Faserschlauchs abgelaufene überschüssige, sich im Schlauchhohlraum ansammelnde Flüssigkeit. Diese ist durch die Rohrleitungen 26 aus dem Schlauchhohlraum abpumpbar. 27 zeigt einen Hohlzylinder mit in dessen Wandung liegendem Kreisringschlitzspalt 28 mit Mündungsöffnung 28a an der Innenseite des Hohlzylinders 27. Es ist 29 aus der Mündungsöffnung 28a des Kreisringschlitzspalts 28 austretende Fällflüssigkeit 13, die diesem aus dem Vorratsgefäß 12 über die Rohrleitung 11 zugeführt wird. 30 bedeutet einen Fällflüssigkeitsfilm auf der Außenseite des Schlauchs und 31 weitere Luftstrecken.

Die strichlierte Gerade A—B stellt diejenige sich im rechten Winkel zur Schlauchlängsachse ausdehnende horizontale Ebene dar, in der sich jeweils der Kreisringschlitzspalt 9 des Mantels 8 sowie der Kreisringschlitzspalt 15 des Zylinders 14 sowie zugleich die ihnen entsprechenden Fällflüssigkeitsauftrefflinien gemeinsam erstrecken.

Der Kreisringschlitzspalt 28 in der Wand des Hohlzylinders 27 sowie die ihm entsprechende Fällflüssigkeitsauftrefflinie erstrecken sich in der horizontalen Ebene C—D. Es ist 32 eine zweite drehbar gelagert angeordnete Walze zum Umlenken des Schlauchs nach der erneuten Fällflüssigkeitsbeaufschlagung seiner Außenseite.

Aus Gründen zeichnerischer Vereinfachung ist in der Figur die Bildung des Faserschlauches durch überlappendes Falten einer Faserbahn nicht dargestellt, desgleichen werden auch die Weiterbehandlung des faserverstärkten Cellulosehydratschlauchs durch Hindurchführen desselben durch Waschbäder sowie durch chemische Weichmachungsmittel enthaltende Flüssigkeit und das anschließende Trocknen des Schlauchs nicht gezeigt.

Ebenfalls nicht gezeigt sind die zur lagefixierten Anordnung der genannten Bauelemente erforderlichen Halteeinrichtungen.

**Patentansprüche**

1. Verfahren zur kontinuierlichen Herstellung faserverstärkter Schlauchhüllen auf Basis von Cellulosehydrat, insbesondere Wursthüllen, bei dem man einen Faserschlauch fortlaufend mit wäßriger alkalischer Viskoselösung imprägniert und beschichtet, auf ihn dann Fällflüssigkeit einwirken läßt, danach den faserverstärkten Schlauch auf Basis von Cellulosehydrat wäscht, auf ihn wäßrige, chemisches Weichmachungsmittel enthaltende Flüssigkeit einwirken läßt, ihn trocknet und — gegebenenfalls — mit Wasser nachbefeuchtet, dadurch gekennzeichnet, daß man wenigstens die Außenseite des mit stetiger Geschwindigkeit in Richtung von oben nach unten längsaxial geradlinig fortbewegten viskosierten Faserschlauchs fortlaufend entlang wenigstens einer Kreislinie mit einem Film aus Fällflüssigkeit beaufschlagt und unmittelbar anschließend den Schlauch mit Fällflüssigkeitsfilm auf seiner Oberfläche durch wenigstens eine Luftstrecke frei führt und daß man gegebenenfalls den Schlauch nach Durchlaufen der ersten Luftstrecke wenigstens auf seiner Außenseite erneut entlang einer Kreislinie fortlaufend mit einem Film aus Fällflüssigkeit beaufschlagt und anschließend durch eine weitere Luftstrecke frei hindurchführt, wobei während der Gesamteinwirkungsdauer von Fällflüssigkeitsfilm im Bereich der Luftstrecke(n) die chemische Umwandlung der Viskose erfolgt.

2. Verfahren nach Anspruch 1, dadurch gekennzeichnet, daß man zugleich die Außen- sowie die Innenseite des viskosierten Faserschlauchs jeweils entlang kreisförmiger Linien fortlaufend mit Fällflüssigkeit beaufschlagt.

3. Vorrichtung zur Durchführung des Verfahrens nach Anspruch 1 oder 2, bestehend aus einem Kreisringkörper (1) mit Ringschlitzspalt (2) zum fortlaufenden Imprägnieren und Beschichten eines Faserschlauchs (6) mit wäßriger alkalischer Viskoselösung (5) und einer Einrichtung zum Aufbringen von Fällflüssigkeit (13) auf den viskosierten Faserschlauch (7), dadurch gekennzeichnet, daß — in Schlauchfortbewegungsrichtung von oben nach unten betrachtet — unterhalb des Kreisringkörpers (1) wenigstens ein im Querschnitt kreisförmiges Element (8) zur kreislinienförmigen Beaufschlagung wenigstens der Schlauchaußenseite mit einem Film aus Fällflüssigkeit (13) angeordnet ist, welches als hohlzylinderförmiger Mantel (8) mit an der Mantelinnenseite mündendem Kreisringschlitzspalt (9) in der Mantelwand ausgebildet ist, und daß sich unterhalb des Elements (8) die besagte Luftstrecke anschließt.

4. Vorrichtung nach Anspruch 3, dadurch gekennzeichnet, daß das Element zur kreislinienförmigen Beaufschlagung der Innenseite des viskosierten Faserschlauchs (7) mit Fällflüssigkeit (13) ein Zylinder (14) ist, der einem am Zylinderumfang mündenden Kreisringschlitzspalt (15) aufweist.

5. Vorrichtung nach Anspruch 4, dadurch gekennzeichnet, daß der Zylinder (14) derart zentrisch zum kreisringförmigen Element (8) angeordnet und befestigt ist, daß ihre Längsachsen fluchten.

6. Vorrichtung nach Anspruch 5, dadurch gekennzeichnet, daß der Zylinder (14) wenigstens teilweise innerhalb des zylindrischen Hohlraums des kreisringförmigen Elements angeordnet ist und daß zwischen Zylinderumfangsfläche und der Innenseite des kreisringförmigen Elements ein kreisringförmiger Hohlraum als Durchlaß für den mit Fällflüssigkeit (13) zu beaufschlagenden viskosierten Faserschlauch (7) vorhanden ist.

**Claims**

1. Process for the continuous manufacture of fiber-reinforced tubular casings based on cellulose hydrate, in particular sausage casings, comprising the steps of continuously impregnating and coating a fibrous tubing with an aqueous alkaline viscose solution; then allowing a regenerating fluid to act on the tubing; thereafter washing the fiber-reinforced tubing based on cellulose hydrate; allowing an aqueous liquid containing a chemical plasticizer to act on the tubing; drying the tubing and — optionally — remoistening it with water, wherein a film of regenerating fluid is continuously applied along at least one circular line to at least the outside of the viscose-treated fibrous tubing moving at a steady speed vertically downward in a straight line along its longitudinal axis and immediately thereafter the tubing, with the film of regenerating fluid on its surface, is passed freely through at least one air section and wherein, optionally, a film of regenerating fluid is again continuously applied along a circular line to at least the outside of the tubing which has passed through the first air section and the tubing is then passed freely through an additional air section, the chemical transformation of the viscose taking place during the total time of action of the film of regenerating fluid in the region of the air section(s).

2. A process as claimed in claim 1, wherein regenerating fluid ist continuously applied, simultaneously to the outside and inside of the viscose-treated fibrous tubing, in each case along a circular line.

3. Apparatus for carrying out the process as claimed in claim 1 or claim 2, comprising an annular body (1) having an annular gap (2), for continuously impregnating and coating a fibrous tubing (6) with an aqueous alkaline viscose solution (5), and means for applying regenerating fluid (13) to the viscose-treated fibrous tubing (7), wherein — in the direction of tubing movement, viewed in the downward direction — at least one element (8) of circular cross-section is arranged downstream of the annular body (1), for applying a film of regenerating fluid (13) in the form of a cicular line to at least the outside of the tubing, which element of circular cross-section has the form of a hollow cylindrical jacket (8) having a circular gap (9) terminating on the inside of the jacket in the jacket wall and wherein said air section is provided downstream of the element (8).

4. An apparatus as claimed in claim 3, wherein the element for applying regenerating fluid (13) in the form of a circular line to the inside of the viscose-treated fibrous tubing (7) comprises a cylinder (14) having a circular gap (15) ending on the periphery of the cylinder.

5. An apparatus as claimed in claim 4, wherein the cylinder (14) is arrangend an fastened concentrically with the circular element (8) such that their longitudinal axes are aligned.

6. An apparatus as claimend in claim 5, wherein the cylinder (14) is located at least in part within the cylindrical cavity of the circular element and wherein there is formed between the peripheral surface of the cylinder and the inside of the circular element an annular cavity adapted for the passage of the viscose-treated fibrous tubing (7) to which regenerating fluid (13) is to be applied.

**Revendications**

1. Procédé de fabrication continue de gaines souples renforcées par des fibres, à base d'hydrate de cellulose, en particulier de peaux de saucisses ou de saucissons, par lequel on imprègne et recouvre en continu une gaine en fibres avec une solution alcaline aqueuse de viscose, sur lequel on fait ensuite agir un liquide de précipitation, après quoi la gaine renforcée par des fibres, à base d'hydrate de cellulose, est lavée, on fait agir sur lui un liquide comportant un amolissant chimique aqueux, on le sèche et — le cas échéant — on le réhumidifie avec de l'eau, caractérisé en ce qu'on applique de façon continue un film de liquide de précipitation au moins sur la surface extérieure de la gaine en fibres imprégnée et couverte de viscose et qui se déplace à vitesse constante de haut en bas en ligne droite suivant son axe longitudinal, le long d'au moins une ligne circulaire, après quoi l'on fait passer immédiatement la gaine, pourvue du film de liquide précipitateur à sa surface, par au moins une voie d'aération sans qu'il touche rien et que, le cas échéant, on applique de nouveau sur le tube, après son passage par la première voie d'air, au moins sur sa surface extérieure, le long d'une ligne circulaire, de façon continue, un film de liquide précipitateur, après quoi il passe de nouveau par une voie d'aération sans rien toucher, la transformation chimique de la viscose ayant lieu pendant toute la durée d'action du film de liquide de précipitation dans la région de la voie d'aération.

2. Procédé selon la revendication 1, caractérisé en ce qu'on applique du liquide de précipitation de façon continue le long de lignes circulaires, en même temps sur la surface extérieure et sur la surface intérieure de la gaine en fibres pourvue de viscose.

3. Dispositif pour l'application du procédé selon la revendication 1 ou 2, constitué par un corps annulaire (1) présentant une fente annulaire (2) servant à imprégner et recouvrir en continu une gaine en fibres (6) d'une solution (5) alcaline aqueuse de viscose, et un dispositif servant à amener du liquide de précipitation (13) sur la gaine (7) en fibres imprégnée et couverte de viscose, caractérisé en ce que — vu de haut en bas dans le sens de déplacement de la gaine — au moins un élément (8) de section circulaire est placé au-dessous du corps annulaire (1) pour appliquer selon une ligne circulaire, au moins sur la surface extérieure de la gaine, un film de liquide de précipitation (13), cet élément (8) étant réalisé sous la forme d'une enveloppe creuse cylindrique (8), avec une fente circulaire (9) formée dans la paroi de l'enveloppe et débouchant à la surface intérieure de cette enveloppe, et en ce que la voie d'aération mentionnée s'y rattache en-dessous de l'élément (8).

4. Dispositif selon la revendication 3, caractérisé en ce que l'élément servant à appliquer du liquide de précipitation (13) sur la surface intérieure de la gaine en fibres (7) imprégnée et couverte de viscose selon une ligne circulaire est un cylindre (14) qui présente une fente circulaire (15) s' ouvrant sir sa périphérie.

5. Dispositif selon la revendication 4, caractérisé en ce que le cylindre (14) est placé et fixé en étant centré par rapport à l'élément circulaire (8) de telle façon que leurs axes longitudinaux coïncident.

6. Dispositif selon la revendication 5, caractérisé en ce que le cylindre (14) est placé au moins en partie à l'intérieur de l'espace vide cylindrique de l'élément circulaire et qu'il y a, entre la surface extérieure du cylindre et la surface intérieure de l'élément circulaire, un espace vide annulaire qui sert de passage à la gaine en fibres (7) imprégnée et couverte de viscose devant recevoir du liquide de précipitation (13).